# EUROPÄISCHE PATENTANMELDUNG

(11) **EP 4 306 917 A1**
(43) Veröffentlichungstag der Anmeldung: **17.01.2024**
(21) Anmeldenummer: 23180148.1
(22) Anmeldetag: 19.06.2023
(51) Int. Cl.: G01H 3/04, G01F 23/296

(54) **VIBRATIONSSENSOR MIT ABGLEICHELEMENT UND VERFAHREN ZUM ABGLEICHEN DER SCHWINGUNGSEIGENSCHAFTEN ZWEIER ZINKEN**

(30) Priorität: 11.07.2022 DE 102022117169
(71) Anmelder: VEGA Grieshaber KG, 77709 Wolfach (DE)
(72) Erfinder: Gruhler, Holger, 78609 Tuningen (DE)
(74) Vertreter: Patentanwälte Bauer Vorberg Kayser

(57) **Zusammenfassung**

Die Erfindung betrifft einen Vibrationssensor (10) mit einem Gehäuse (12) und mit einem mechanischen Schwinger (14), wobei an dem mechanischen Schwinger (14) ein erster Zinken (16) und ein zweiter Zinken (18) angeordnet sind, und mit einem Antrieb (20) zur Anregung des mechanischen Schwingers (14), wobei der Antrieb (20) mittels eines Jochs (22) gegenüber dem mechanischen Schwinger (14) festgelegt ist, wobei das Joch (22) mindestens einen Joch-Hohlraum (32) aufweist und wobei ein Ansatz (36) mindestens eines Zinkens (16, 18) einen Zinken-Hohlraum (38) aufweist und wobei der Joch-Hohlraum (32) und der Zinken-Hohlraum (38) miteinander fluchten und wobei in dem Joch-Hohlraum (32) ein Abgleichelement (40) derart verschieblich angeordnet ist, dass es zumindest teilweise in dem Zinken-Hohlraum (38) anordenbar ist.

Die Erfindung betrifft ferner ein Verfahren zum Abgleich der Schwingungseigenschaften zweier Zinken (16, 18) eines Vibrationssensors (10).

## Beschreibung

Die Erfindung betrifft einen Vibrationssensor mit Abgleichelement gemäß Patentanspruch 1. Ferner betrifft die Erfindung ein Verfahren zum Abgleichen der Schwingungseigenschaften zweier Zinken eines Vibrationssensors gemäß Patentanspruch 8.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandmessgeräte, Grenzstandmessgeräte und Druckmessgeräte mit Sensoren, die die entsprechenden Prozessvariablen Füllstand, Grenzstand oder Druck erfassen. Häufig sind solche Feldgeräte mit übergeordneten Einheiten, zum Beispiel Leitsystemen oder Steuereinheiten, verbunden. Diese übergeordneten Einheiten dienen zur Prozesssteuerung, Prozessvisualisierung und/oder Prozessüberwachung. Die aus dem Stand der Technik bekannten Feldgeräte weisen in der Regel ein Gehäuse, einen Sensor und eine in dem Gehäuse angeordnete Elektronikeinheit auf.

Als Beispiel für solche Feldgeräte sind aus dem Stand der Technik unter anderem Vibrationssensoren bekannt, die beispielsweise als Vibrationsgrenzschalter verwendet werden. Der Vibrationssensor weist in der Regel einen über einen Antrieb zu einer Schwingung anregbaren mechanischen Schwinger (typischerweise eine Membran) auf, mittels welchen am mechanischen Schwinger angeordnete Zinken zu einer Schwingung anregbar sind. Abhängig von einem Bedeckungsstand der Zinken mit einem Füllgut sowie abhängig von der Viskosität dieses Füllgutes schwingen die Zinken und damit der mechanische Schwinger mit einer charakteristischen Frequenz und Amplitude, die von dem Vibrationssensor detektiert werden und in ein Messsignal umgewandelt werden kann.

Bei einem Vibrationssensor mit zwei Zinken (gabelförmiger Vibrationssensor) kann es vorkommen, dass die beiden Zinken (z.B. durch eine asymmetrische Gussmembran, ein asymmetrisches Anschweißen der Zinken oder auch Asymmetrien im Antrieb) nicht mit identischer Frequenz und Amplitude schwingen.

Um aber ein bezüglich der Einspannung an der Membran ruhiges (symmetrisches) Schwingen der Zinken sowie einen zuverlässigen Betrieb zu ermöglichen, ist es erforderlich die Resonanzfrequenz und Schwingungsamplitude der beiden Zinken derart einzustellen, dass sie identisch sind.

Hierfür wird bislang unter anderem mit Hilfe eines Fräsprozesses die Steifheit eines Zinkens manipuliert, wobei so lange Material aus einem Zinken herausgefräst wird, bis beide Zinken mit gleicher Frequenz und gleicher Amplitude schwingen.

Nachteil dieses Fräsprozesses ist es, dass dieser zeitaufwendig ist, da durch die mechanische Bearbeitung Reibung und Wärme entsteht. Um die Frequenz als Abgleichgröße zuverlässig messen zu können, sind nach dem Fräsen Wartezeiten bzw. zusätzliche Kühlung erforderlich. Außerdem entsteht durch das Fräsen eine sichtbare Veränderung am Zinken, die sich in einem optisch sichtbaren Bereich befindet.

Die zugrundeliegende Aufgabe der Erfindung ist es, einen Vibrationssensor mit zwei Zinken und ein Verfahren zum Abgleichen der Schwingungseigenschaften zweier Zinken zur Verfügung zu stellen, mittels welchen ein einfacher Abgleich des Schwingungsverhaltens der beiden Zinken ermöglicht ist.

Die Lösung der Aufgabe erfolgt erfindungsgemäß mit den Merkmalen der unabhängigen Ansprüche. Weitere praktische Ausführungsformen und Vorteile sind in Verbindung mit den abhängigen Ansprüchen beschrieben.

Ein erfindungsgemäßer Vibrationssensor weist ein Gehäuse auf und ferner einen mechanischen Schwinger. Bei dem mechanischen Schwinger handelt es sich insbesondere um eine Membran. An dem mechanischen Schwinger sind ein erster Zinken und ein zweiter Zinken angeordnet. Die beiden Zinken sind voneinander beabstandet am mechanischen Schwinger angeordnet und es handelt sich hier um einen gabelförmigen Vibrationssensor. Der Vibrationssensor weist einen Antrieb zur Anregung des mechanischen Schwingers auf.

Der Antrieb ist hier über ein Joch an dem Gehäuse befestigt und mittels des Jochs gegenüber dem mechanischen Schwinger festgelegt. Als Joch wird hier ein Teil bezeichnet, welches auf der dem mechanischen Schwinger gegenüberliegenden Seite des Antriebs quer über den Antrieb verläuft und zur Anbindung des Antriebs dient und dazu dient, den Antrieb gegenüber der Membran zu verspannen. Insbesondere handelt es sich bei dem Joch um ein separates Teil. Vorzugsweise ist das Joch topfförmig und im Querschnitt betrachtet u-förmig ausgebildet und stützt sich mit einer Seitenwand an dem mechanischen Schwinger ab. Insbesondere ist das Joch mit dem mechanischen Schwinger verschraubt. Eine Grundfläche des Jochs verläuft in Querrichtung des Vibrationssensors. Insbesondere weist die Grundfläche eine zentrale Durchgangsöffnung auf, in welcher ein Vorspannbolzen angeordnet ist, der zur Befestigung und zum Spannen des Antriebs gegenüber dem mechanischen Schwinger dient.

Das Joch weist hier mindestens einen Joch-Hohlraum auf. Der Joch-Hohlraum erstreckt sich insbesondere in der Seitenwand des Jochs und über die vollständige Höhe der Seitenwand. Ein Ansatz mindestens eines Zinkens weist zudem einen Zinken-Hohlraum auf. Der Ansatz ist dabei der an den mechanischen Schwinger angrenzender Abschnitt des Zinkens. Der Ansatz erstreckt sich insbesondere über maximal 30% der Länge des Zinkens und vorzugsweise über maximal 20% oder maximal 10% des Zinkens. Der Ansatz kann insbesondere gegenüber dem restlichen Grundkörper des Zinkens verdickt sein. Der mindestens eine Joch-Hohlraum und der korrespondierende Zinken-Hohlraum fluchten miteinander. In dem mechanischen Schwinger ist insbesondere eine Öffnung, die einen Durchgang zwischen dem Joch-Hohlraum und dem Zinken-Hohlraum ermöglicht. In dem Joch-Hohlraum ist ein Abgleichelement derart verschieblich angeordnet, dass es zumindest teilweise in dem Zinken-Hohlraum anordenbar ist.

Durch die Anordnung eines Abgleichelementes, welches durch das Joch bis in den Ansatz des mindestens einen Zinkens verschoben werden kann, wird die Steifigkeit des Ansatzes des mindestens einen Zinkens direkt am mechanischen Schwinger derart verändert, dass damit auch die Schwingungsfrequenz und die Schwingungsamplitude des Zinkens verändert werden. Durch das Joch bzw. den Joch-Hohlraum hindurch kann das Abgleichelement besonders gut geführt und auch in einfacher Weise verschoben werden. Falls kein Abgleich notwendig sein sollte, kann das Abgleichelement lediglich im Joch-Hohlraum platziert werden oder in einfacher Weise entnommen werden. Der Ansatz ist dabei derart ausgelegt, dass das Einbringen des Abgleichelementes die Steifheit des gesamten Zinkens beeinflusst, d.h. der Ansatz ist insbesondere im Vergleich zum Abgleichelement weniger massiv ausgebildet.

Ein weiterer Vorteil - im Vergleich zum Fräsen - besteht darin, dass die Position des Abgleichbolzens korrigiert werden kann, während ein einmal abgefrästes Material keine Korrektur mehr ermöglicht, bzw. nur durch weitere Fräsung am gegenüberliegenden Zinken ausgeglichen werden kann.

In einer praktischen Ausführungsform des Vibrationssensors ist der Joch-Hohlraum als Durchführung ausgebildet und weist ein Innengewinde auf. Die Durchführung ist insbesondere von einer Hohlschraube gebildet. Das Abgleichelement weist korrespondierend dazu ein Außengewinde auf. Durch ein Einschrauben des Abgleichelementes in den Joch-Hohlraum, kann die Position des Abgleichelementes besonders genau eingestellt werden. Das Abgleichelement weist insbesondere ein Feingewinde auf, um die Einstellung und Positionierung des Abgleichelementes möglichst genau vornehmen zu können.

Insbesondere ist der mindestens eine Joch-Hohlraum durch eine Hohlschraube gebildet. Die Hohlschraube dient vorzugsweise gleichzeitig zur Befestigung des Jochs an dem mechanischen Schwinger. Eine solche Anordnung ist besonders bauraumsparend, da der zusätzliche Joch-Hohlraum zur Anordnung des Abgleichelementes innerhalb der typischerweise vorgesehenen Befestigung des Jochs ausgebildet ist.

Wenn der Joch-Hohlraum ein Innengewinde aufweist, ist das Abgleichelement insbesondere korrespondierend dazu eine Gewindestange. Die Gewindestange kann dann in einfacher Weise in die Hohlschraube eingeführt werden und zum Abgleich der Schwingungseigenschaften von dem Joch-Hohlraum zumindest teilweise bis in den Zinken-Hohlraum verschoben werden.

In einer weiteren praktischen Ausführungsform ist der Zinken-Hohlraum als Sackloch ausgebildet. Der Zinken-Hohlraum erstreckt sich insbesondere nur über den Ansatz des Zinkens, sodass der Zinken im Übrigen unverändert bleibt und der Zinken mechanisch möglichst intakt bleibt. Mittels eines Sacklochs nur im Ansatz wird die Verschiebbarkeit des Abgleichelementes auf den Ansatz des Zinkens begrenzt. Der Zinkenhohl-Raum kann zudem in einem Winkel zur Schwingungsachse des Zinkens verlaufen.

Alternativ kann sich der Zinken-Hohlraum auch über den Ansatz des Zinkens hinaus bis in den Grundkörper des Zinkens erstrecken. Damit wird der Bereich, über welchen die Schwingungseigenschaften durch das Abgleichelement eingestellt werden können, erweitert und es können auch Zinken mit sehr unterschiedlichen Schwingungseigenschaften abgeglichen werden.

Der Zinken-Hohlraum kann ein Gewinde aufweisen, in welches das Abgleichelement einschraubbar und entsprechend auch in dem Zinkenhohlraum fixierbar ist. Alternativ kann das Abgleichelement eng in dem Joch-Hohlraum geführt sein oder auch gewindefrei verklebt sein. Wenn das Abgleichelement als Gewindestange ausgeführt ist, kann diese für die letzteren beiden Fälle in einem unterem Bereich auch ohne Gewinde ausgeführt sein.

In einer weiteren praktischen Ausführungsform des Vibrationssensors weisen der erste Zinken und der zweite Zinken in ihrem Ansatz jeweils einen Zinken-Hohlraum auf und korrespondierend dazu ist im Joch jeweils ein dazu fluchtender Joch-Hohlraum ausgebildet. Insbesondere weist das Joch dann zwei, sich jeweils über die Höhe einer Seitenwand erstreckende Joch-Hohlräume auf. Insbesondere sind beide Joch-Hohlräume durch eine Hohlschraube zur Befestigung des Jochs am mechanischen Schwinger gebildet. Es kann dann in einem oder auch in beiden Joch-Hohlräumen ein Abgleichelement angeordnet sein und nach Bedarf kann in den Ansatz eines Zinkens (oder beider Zinken) das jeweilige Abgleichelement eingeführt werden. Durch die Möglichkeit beide Zinken in ihren Schwingungseigenschaften anzupassen, wird die insofern Flexibilität erhöht als nunmehr in einem gewissen Bereich eine gewünschte Schwingungsfrequenz und Amplitude einstellbar sind und beide Zinken auf diese eingestellt werden können.

Die Erfindung betrifft auch ein Verfahren zum Abgleich der Schwingungseigenschaften, d.h. insbesondere der Resonanzfrequenz und Amplitude, zweier Zinken eines Vibrationssensors. Es handelt sich insbesondere um einen wie vorstehend beschriebenen Vibrationssensor mit zwei Zinken und einem Joch. Die Steifigkeit des Ansatzes mindestens einen Zinkens wird verändert, indem ein Abgleichelement durch einen Joch-Hohlraum in damit fluchtenden Zinken-Hohlraum in dem Ansatz mindestens eines Zinkens eingeführt wird. Je nachdem wie weit das Abgleichelement in den Zinken eingeführt wird, ändern sich die Schwingungseigenschaften des Zinkens.

In Bezug auf die weiteren Vorteile wird dazu auf die vorstehende Beschreibung verwiesen.

Insbesondere wird das Abgleichelement in den Joch-Hohlraum und den Zinken-Hohlraum eingeschraubt. Damit kann die Position des Abgleichelementes besonders genau und kontrolliert eingestellt werden. Insbesondere wird der Joch-Hohlraum durch eine Hohlschraube gebildet und das Abgleichelement ist eine Gewindestange, welche in die Hohlschraube eingeführt wird und in dieser verschraubt wird.

Nach dem Abgleich der Schwingungseigenschaften kann die Position des Abgleichelementes fixiert werden. Dies kann beispielsweise durch Einfüllen eines Klebers bzw. Gewindesicherungsklebers erfolgen. Der Kleber kann insbesondere vor dem Abgleich eingeführt sein und anschließend ausgehärtet werden.

Weitere praktische Ausführungsformen sind im Folgenden in Zusammenhang mit den Figuren beschrieben. Es zeigen:
- Fig. 1: einen Vibrationssensor gemäß einer ersten Ausführungsform mit zwei Zinken, einem Joch und mit einem Abgleichelement in einer schematischen Darstellung im Querschnitt,
- Fig. 2: einen Vibrationssensor gemäß einer zweiten Ausführungsform in einer schematischen Darstellung im Querschnitt, mit zwei Zinken, einem Joch und mit zwei Abgleichelementen, wobei die Abgleichelemente in einer Ausgangsposition angeordnet sind,
- Fig. 3: den Vibrationssensor aus Fig. 2 mit zwei Abgleichelementen, wobei ein Abgleichelement in einer gegenüber der Ausgangsposition verfahrenen, zweiten Position angeordnet ist,
- Fig. 4: ein Diagramm, welches die Änderung der Frequenz der beiden Zinken in Abhängigkeit der geänderten Position des Abgleichelementes zeigt.

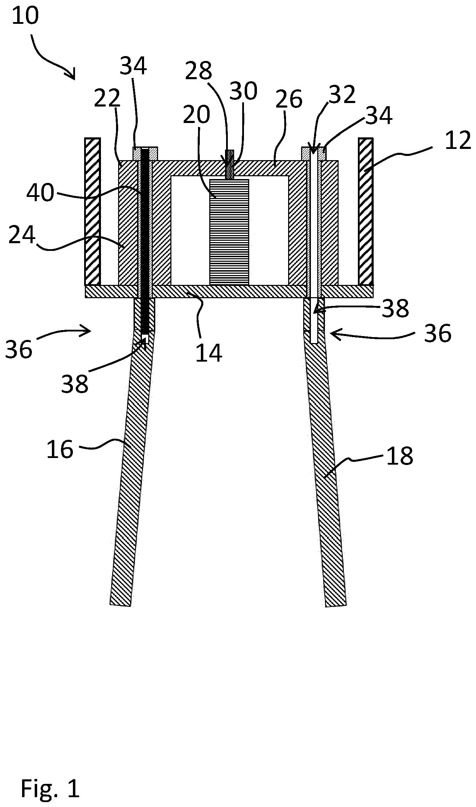

In Fig. 1 ist ein gabelförmiger Vibrationssensor 10 in einer ersten Ausführungsform dargestellt. Der Vibrationssensor 10 umfasst ein Gehäuse 12 mit einem mechanischen Schwinger 14 - hier einer Membran. An dem mechanischen Schwinger 14 sind nebeneinander ein erster Zinken 16 und ein zweiter Zinken 18 angeordnet.

Zur Anregung des mechanischen Schwingers 14 ist ein Antrieb 20 in dem Gehäuse 12 angeordnet. Der Antrieb 20 ist mit dem mechanischen Schwinger 14 verbunden und kann diesen in Schwingungen versetzen und auch Schwingungen des mechanischen Schwingers 14 detektieren.

In dem Gehäuse 12 ist ferner ein Joch 22 angeordnet. Das Joch 22 ist topförmig ausgebildet und ist im Querschnitt betrachtet u-förmig. Das Joch 22 umgibt den Antrieb 20 seitlich und auf der dem mechanischen Schwinger 14 gegenüberliegenden Seite. Das Joch 22 weist eine umlaufende Seitenwand 24 und ein sich quer zur Axialrichtung (z-Richtung) erstreckende Grundfläche 26 auf.

Über das Joch 22 ist der Antrieb 20 gegenüber dem mechanischen Schwinger 14 verspannt. Dazu weist das Joch 22 ein zentrale Durchgangsöffnung 28 auf, durch welche ein Bolzen 30 bzw. eine Madenschraube geführt ist, um den Antrieb 20 in Richtung des mechanischen Schwingers 14 zu spannen.

Zusätzlich weist das Joch 22 in der Seitenwand 24 zwei Joch-Hohlräume 32 auf, welche sich vorliegend über die gesamte Höhe der Seitenwand 24 bis zum mechanischen Schwinger 14 erstrecken. Die Joch-Hohlräume 32 sind vorliegend jeweils von einer Hohlschraube 34 gebildet, welche gleichzeitig zur Befestigung des Jochs 22 am mechanischen Schwinger 14 dienen. Der Joch-Hohlraum 32 erstreckt sich hier jeweils durch den mechanischen Schwinger 14 hindurch. Die Hohlschraube 34 weist ein Innengewinde auf.

Fluchtend mit jeweils einem Joch-Hohlraum 32 sind in einem Ansatz 36 der Zinken 16, 18 jeweils Zinken-Hohlräume 38 ausgebildet. Die Zinken-Hohlräume 38 sind jeweils als Sackloch ausgebildet.

Bei dem hier links angeordneten ersten Zinken 16 ist in dem Joch-Hohlraum 32 und damit fluchtendem Zinken-Hohlraum 38 ein darin verschiebliches Abgleichelement 40 angeordnet. Bei dem Abgleichelement 40 handelt es sich hier um eine Gewindestange.

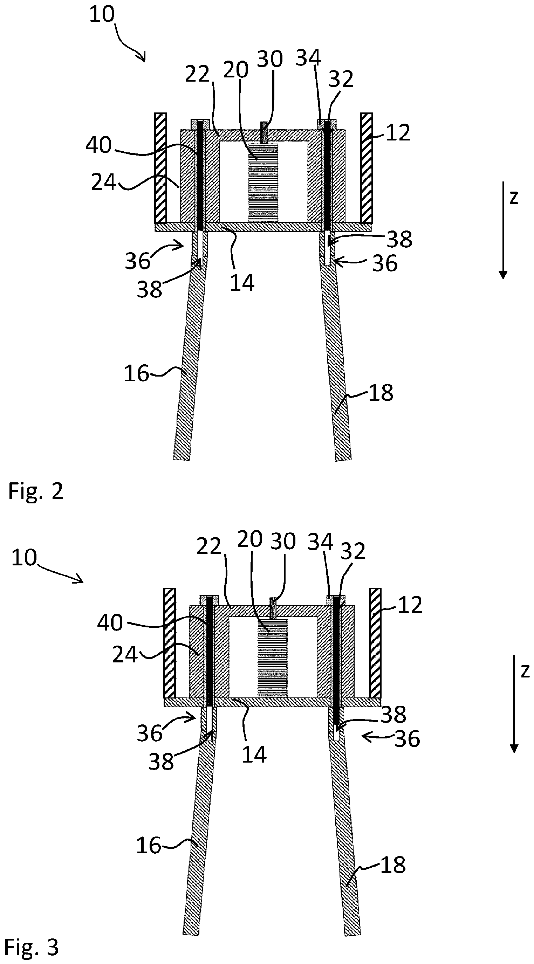

Im Folgenden wird in Verbindung mit den Fig. 2, Fig. 3 und Fig. 4 ein Verfahren zum Abgleichen der Schwingungseigenschaften erläutert.

Im Folgenden werden zur Beschreibung weiterer Ausführungsformen für identische oder zumindest funktionsgleiche Bauelemente dieselben Bezugszeichen verwendet, wie zur Beschreibung der ersten Ausführungsform.

In Fig. 2 und Fig. 3 ist eine zweite Ausführungsform eines Vibrationssensors 10 dargestellt. Dieser entspricht im Wesentlichen der ersten Ausführungsform bis darauf, dass in den Joch-Hohlräumen 32 beider Zinken 16, 18 ein Abgleichelement 40 angeordnet ist.

In Fig. 2 sind beide Abgleichelemente 40 lediglich in dem Joch-Hohlraum 32 positioniert und ragen nicht weiter in z-Richtung hervor als bis zum mechanischen Schwinger 14. Die Abgleichelemente 40 sind in einer Ausgangsposition angeordnet.

Im Gegensatz dazu ist in Fig. 3 das rechte Abgleichelement 40 im rechten Zinken 18 weiter in z-Richtung verschoben und ragt nunmehr bis in den Zinken-Hohlraum 38 in dem Ansatz 36 des rechten Zinkens 18 hinein. Das rechte Abgleichelement 40 ist entsprechend in z-Richtung bis in den Zinken-Hohlraum 38 hineingeschraubt. Das linke Abgleichelement 40 in dem linken Zinken 16 weist noch dieselbe Position auf wie in Fig. 2.

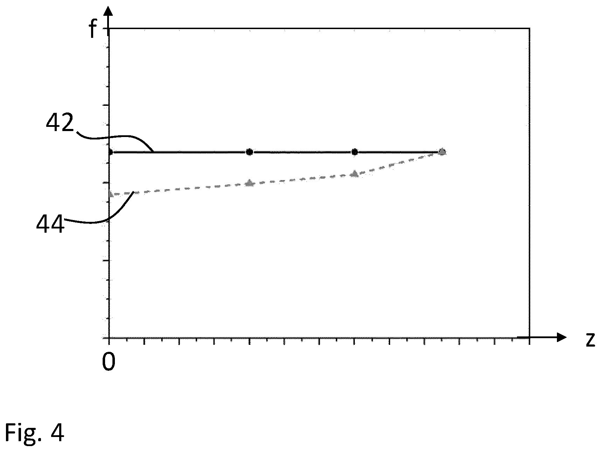

In Fig. 4 wird deutlich, was durch Verschieben bzw. Einschrauben des Abgleichelementes 40 in dem jeweiligen Zinken 18 passiert. In Fig. 4 ist auf der y-Achse die Verlagerung "z" des Abgleichelementes 40 in z-Richtung aufgetragen. In x-Richtung ist die Resonanzfrequenz "f" der Zinken 16, 18 aufgetragen.

Die Kurve 42 (durchgezogene Linie) gibt dabei die Resonanzfrequenz des ersten Zinkens 16, hier des linken Zinkens wieder. Die Kurve 44 (gestrichelte Linie) gibt dabei die Resonanzfrequenz des zweiten, rechten Zinkens 18 wieder.

Wie gut erkennbar ist, weichen bei z=0 die Resonanzfrequenzen der beiden Zinken 16, 18 voneinander ab. Der erste, linke Zinken 16 weist bei identischer Bedeckung (oder keiner Bedeckung) eine höhere Resonanzfrequenz auf als der zweite, rechte Zinken 18.

Um die beiden Resonanzfrequenzen anzugleichen und aufeinander abzustimmen, wird wie in Fig. 3 gezeigt, das Abgleichelement 40 zur Änderung der Steifigkeit des Ansatzes 38 des Zinkens 18, in diesen hineingeschraubt. Je weiter das Abgleichelement in z-Richtung geschraubt wird, umso mehr gleicht sich die Resonanzfrequenz in Kurve 44 der Resonanzfrequenz des ersten Zinkens 16 an. Das Abgleichelement 40 wird so weit in den zweiten Zinken 18 eingeführt, bis die Resonanzfrequenz des zweiten Zinkens 18 der Resonanzfrequenz des ersten Zinkens 16 entspricht.

### Bezugszeichenliste

- 10: Vibrationssensor
- 12: Gehäuse
- 14: mechanischer Schwinger (Membran)
- 16: erster Zinken
- 18: zweiter Zinken
- 20: Antrieb
- 22: Joch
- 24: Seitenwand
- 26: Grundfläche
- 28: Durchgangsöffnung
- 30: Bolzen
- 32: Joch-Hohlraum
- 34: Hohlschraube
- 36: Ansatz
- 38: Zinken-Hohlraum
- 40: Abgleichelement
- 42: Frequenz-Verlauf
- 44: Frequenz-Verlauf

- f: Resonanzfrequenz
- z: Axialrichtung

## Patentansprüche

1. Vibrationssensor mit einem Gehäuse (12) und mit einem mechanischen Schwinger (14), wobei an dem mechanischen Schwinger (14) ein erster Zinken (16) und ein zweiter Zinken (18) angeordnet sind, und mit einem Antrieb (20) zur Anregung des mechanischen Schwingers (14), wobei der Antrieb (20) mittels eines Jochs (22) gegenüber dem mechanischen Schwinger (14) festgelegt ist, wobei das Joch (22) mindestens einen Joch-Hohlraum (32) aufweist und wobei ein Ansatz (36) mindestens eines Zinkens (16, 18) einen Zinken-Hohlraum (38) aufweist und wobei der Joch-Hohlraum (32) und der Zinken-Hohlraum (38) miteinander fluchten und wobei in dem Joch-Hohlraum (32) ein Abgleichelement (40) derart verschieblich angeordnet ist, dass es zumindest teilweise in dem Zinken-Hohlraum (38) anordenbar ist.

2. Vibrationssensor nach dem vorstehenden Anspruch,
**dadurch gekennzeichnet, dass**
der Joch-Hohlraum (32) als Durchführung ausgebildet ist und ein Innengewinde aufweist und das Abgleichelement (40) korrespondierend dazu ein Außengewinde.

3. Vibrationssensor nach einem der vorstehenden Ansprüche,
**dadurch gekennzeichnet, dass**
der Joch-Hohlraum (32) durch eine Hohlschraube (34) gebildet ist und die Hohlschraube (34) gleichzeitig zur Befestigung des Jochs (22) am mechanischen Schwinger (14) dient.

4. Vibrationssensor nach einem der vorstehenden Ansprüche,
**dadurch gekennzeichnet, dass**
das Abgleichelement (40) eine Gewindestange ist.

5. Vibrationssensor nach einem der vorstehenden Ansprüche,
**dadurch gekennzeichnet, dass**
der Zinken-Hohlraum (38) als Sackloch ausgebildet ist.

6. Vibrationssensor nach einem der vorstehenden Ansprüche,
**dadurch gekennzeichnet, dass**
der Zinken-Hohlraum (38) ein Gewinde aufweist.

7. Vibrationssensor nach dem vorstehenden Anspruch,
**dadurch gekennzeichnet, dass**
der erste Zinken (16) und der zweite Zinken (18) in ihrem Ansatz (36) jeweils einen Zinken-Hohlraum (38) aufweisen und das korrespondierend dazu im Joch (22) jeweils ein dazu fluchtender Joch-Hohlraum (32) ausgebildet ist.

8. Verfahren zum Abgleich der Schwingungseigenschaften zweier Zinken (16, 18) eines Vibrationssensors (10), wobei die Steifigkeit eines Ansatzes (36) mindestens eines Zinkens (16, 18) verändert wird, indem ein Abgleichelement (40) durch einen Joch-Hohlraum (32) in einen damit fluchtenden Zinken-Hohlraum (38) in dem Ansatz (36) des mindestens eines Zinkens (16, 18) eingeführt wird.

9. Verfahren nach dem vorstehenden Anspruch,
**dadurch gekennzeichnet, dass**
das Abgleichelement (40) in den Joch-Hohlraum (32) und den Zinken-Hohlraum (38) eingeschraubt wird.

10. Verfahren nach einem der vorstehenden Ansprüche,
**dadurch gekennzeichnet, dass**
nach dem Abgleich der Schwingungseigenschaften die Position des Abgleichelementes (40) fixiert wird.
